# EUROPEAN PATENT APPLICATION

(11) **EP 4 459 005 A1**
(43) Date of publication of application: **06.11.2024**
(21) Application number: 22915903.3
(22) Date of filing: 22.12.2022
(51) Int. Cl.: C23C 22/78, C23C 22/17

(54) **SURFACE ADJUSTER FOR ZINC PHOSPHATE CHEMICAL CONVERSION TREATMENT**

(30) Priority: 27.12.2021 JP 2021212058
(71) Applicant: Nihon Parkerizing Co., Ltd., Tokyo 103-0027 (JP)
(72) Inventor: KAWAGOSHI, Ryosuke, Tokyo 103-0027 (JP)
(74) Representative: Jones, Nicholas Andrew
(86) International application number: PCT/JP2022/047309
(87) International publication number: WO 2023/127680

(57) **Abstract**

The present invention addresses the problem of providing a surface adjuster with which a chemical conversion coating having a surface state in which zinc phosphate crystals are densely packed can be formed even when the zinc phosphate chemical conversion treatment step is performed in a short time. The problem is solved by a surface adjuster for zinc phosphate chemical conversion treatment, which contains: a zinc-containing phosphate (A); an alkali salt (B) of a copolymer (b2) containing a 2-acrylamide-2-methylpropane sulfonic acid unit (b1), in which a ratio of (b1) in the copolymer (b2) is 7.5% by mass to 40.0% by mass; and an aqueous medium (C).

## Description

### TECHNICAL FIELD

The present invention relates to a surface adjuster that is used in the surface adjustment step performed as a pretreatment of the step of forming a zinc phosphate chemical conversion coating on or over a metal surface.

### BACKGROUND ART

Metal materials are coated for the purpose of providing functions such as rust prevention, decoration, and the like. Coating on metal materials is performed through the steps of, for example, degreasing, surface adjustment, phosphate chemical conversion treatment, and electrodeposition coating. In the surface adjustment step, it is known to use, for example, a surface adjuster containing zinc phosphate particles (see Patent Document 1).

### RELATED ART DOCUMENT

### PATENT DOCUMENT

[Patent Document 1] Japanese Unexamined Patent Application Publication No. 2005-264338

### SUMMARY OF THE INVENTION

### PROBLEMS TO BE SOLVED BY THE INVENTION

However, there is a problem that, even with the use of the surface adjuster of Patent Document 1, a chemical conversion coating having a surface state in which zinc phosphate crystals are densely packed cannot be formed when the subsequent zinc phosphate chemical conversion treatment is performed in a short time.

An object of the present invention is to provide a surface adjuster with which a chemical conversion coating having a surface state in which zinc phosphate crystals are densely packed can be formed even when the zinc phosphate chemical conversion treatment step is performed in a short time.

### MEANS FOR SOLVING THE PROBLEMS

The present inventor intensively studied to solve the above-described problem, and consequently discovered that the problem can be solved by, prior to a zinc phosphate chemical conversion treatment, treating a surface of a metal material with a surface adjuster that contains a zinc-containing phosphate (A), an alkali salt (B) of a specific copolymer, and an aqueous medium (C).

That is, the present invention provides the following.
[1] A surface adjuster for zinc phosphate chemical conversion treatment, containing:
   a zinc-containing phosphate (A);
   an alkali salt (B) of a copolymer (b2) containing a 2-acrylamide-2-methylpropane sulfonic acid unit (b1), in which a ratio of (b1) in the copolymer (b2) is 7.5% by mass to 40.0% by mass; and
   an aqueous medium (C).
[2] The surface adjuster for zinc phosphate chemical conversion treatment according to [1], containing substantially no hectorite.
[3] A method of producing a metal material having a chemical conversion coating, the method including:
   the surface adjustment step of bringing the surface adjuster for zinc phosphate chemical conversion treatment according to [1] or [2] into contact with a metal material; and
   the chemical conversion treatment step of bringing a zinc phosphate chemical conversion treatment agent into contact with the metal material after the surface adjustment step.
[4] A method of producing a metal material having a paint, the method including the painging step of forming a paint on or over a surface of a metal material having a chemical conversion coating that is obtained by the method according to [3].

### EFFECTS OF THE INVENTION

According to the present invention, a surface adjuster, with which a chemical conversion coating having a surface state in which zinc phosphate crystals are densely packed can be formed even when the zinc phosphate chemical conversion treatment step is performed in a short time, can be provided. In addition, this surface adjuster exerts an effect of having excellent stability even when it contains a solid component at a high concentration.

### MODE FOR CARRYING OUT THE INVENTION

The surface adjuster for zinc phosphate chemical conversion treatment according to one embodiment of the present invention contains: a zinc-containing phosphate (A); an alkali salt (B) of a copolymer (b2) containing a 2-acrylamide-2-methylpropane sulfonic acid unit (b 1), in which a ratio of (b1) in the copolymer (b2) is 7.5% by mass to 40.0% by mass; and an aqueous medium (C). By using this surface adjuster for zinc phosphate chemical conversion treatment, a zinc phosphate chemical conversion coating in which zinc phosphate crystals are densely packed can be produced even when the zinc phosphate chemical conversion treatment step is performed in a short time.

### <Phosphate (A)>

The zinc-containing phosphate (A) is a substance that can yield crystals of a zinc-containing phosphate. The zinc-containing phosphate may be such a phosphate itself, or may be a product generated by a reaction between a compound containing phosphoric acid and a compound containing zinc.

The phosphate (A) may further contain a metal such as iron, nickel, or manganese, in addition to zinc. Specific examples of the phosphate (A) include a phosphate containing zinc and iron, a phosphate containing zinc and nickel, and a phosphate containing zinc, nickel, and manganese. As the phosphate (A), for example, the zinc phosphate (particles) described in Japanese Unexamined Patent Application Publication No. 2004-68149 or Japanese Unexamined Patent Application Publication No. 2005-264338 may be used.

The amount of the zinc-containing phosphate (A) contained in the surface adjuster is not particularly limited; however, it is usually 0.03 g/1,000 g or more, preferably 0.15 g/1,000 g or more, but usually 6.0 g/1,000 g or less. By controlling the amount of the zinc-containing phosphate (A) to be in this range, a favorable surface adjusting effect can be obtained.

### <Alkali Salt (B) of Copolymer (b2) (hereinafter, also referred to as "compound (B)")>

The copolymer (b2) contains a 2-acrylamide-2-methylpropane sulfonic acid unit (b1). A ratio of (b1) in the copolymer (b2) is 7.5% by mass to 40.0% by mass, preferably 9.0% by mass to 40.0% by mass.

A unit constituting the copolymer (b2) together with the unit (b1) is not particularly limited, and examples thereof include an acrylic acid unit, a methacrylic acid unit, a maleic acid unit, a fumaric acid unit, an adipic acid unit, and a styrene unit. The compound (B) contains one or more of these units.

A method of producing the compound (B) is not particularly limited and, as a method of producing a sodium compound of the copolymer (b2) composed of acrylic acid and 2-acrylamide-2-methylpropane sulfonic acid (b1), for example, the sodium compound can be obtained by copolymerizing acrylic acid and 2-acrylamide-2-methylpropane sulfonic acid (b1), and subsequently neutralizing the resulting copolymer with a sodium-containing alkali component.

Examples of the alkali component include: hydroxides and carbonates of alkali metals such as sodium and potassium; hydroxides and carbonates of alkaline earth metals; ammonia; and organic amines, such as monoethanolamine, diethanolamine, and triethanolamine, and the alkali component is preferably sodium hydroxide, potassium hydroxide, or ammonia. Any of these alkali components may be used to perform neutralization before copolymerizing 2-acrylamide-2-methylpropane sulfonic acid (b1), or after producing the copolymer (b2).

When the ratio of (b1) in the copolymer (b2) is less than 7.5% by mass and the surface adjuster has a high concentration, the phosphate (A) contained in the surface adjuster has poor dispersibility, and precipitation of the phosphate (A) occurs if the surface adjuster is left to stand for an extended period, resulting in poor stability with time. Also when the mass ratio of (b1) exceeds 40.0% by mass and the surface adjuster has a high concentration, the phosphate (A) contained in the surface adjuster has poor dispersibility, and precipitation of the phosphate (A) contained in the surface adjuster occurs if the surface adjuster is left to stand for an extended period. In addition, this makes it difficult to form a zinc phosphate chemical conversion coating by a zinc phosphate chemical conversion treatment in a short time. Further, when the mass ratio of (b1) exceeds 40.0% by mass, since the resulting zinc phosphate crystals have a columnar shape, a dense surface cannot be formed in some cases. It is noted here that the "high concentration" means that the concentration of the compound (B) in the surface adjuster is 5 g/1,000 g or higher, and the concentration of the compound (B) may be 10 g/1,000 g or higher.

The copolymer (b2) has a number-average molecular weight of preferably 100 or more, more preferably 1,000 or more, but preferably 30,000 or less, more preferably 20,000 or less. When the number-average molecular weight is in this range, the component (A) contained in the surface adjuster has good dispersibility, so that the stability with time at a high concentration is improved.

The amount of the compound (B) contained in the surface adjuster is not particularly limited; however, it is usually (at the time of use) 0.001 g/1,000 g to 0.2 g/1,000 g. Since the compound (B) has excellent stability with time even at a high concentration, the amount thereof during storage may be 5 g/1,000 g or more, 10 g/1,000 g or more, but may be 50 g/1,000 g or less.

### <Aqueous Medium (C)>

The aqueous medium (C) is not particularly limited as long as it is water or a mixture of water and a water-miscible organic solvent (a mixture containing not less than 50% by volume of water based on the volume of the aqueous medium). The water-miscible organic solvent is not particularly limited as long as it is miscible with water, and examples thereof include: ketone-based solvents, such as acetone and methyl ethyl ketone; amide-based solvents, such as *N*,*N*'-dimethylformamide and dimethylacetamide; alcohol-based solvents, such as methanol, ethanol, and isopropanol; ether-based solvents, such as ethylene glycol monobutyl ether and ethylene glycol monohexyl ether; and pyrrolidone-based solvents, such as 1-methyl-2-pyrrolidone and 1-ethyl-2-pyrrolidone. These water-miscible organic solvents may be mixed with water singly, or in combination of two or more thereof.

### <Other Components>

The surface adjuster may consist of only the above-described components, or may contain, as other components, known additives such as a water-soluble or water-dispersible resin, a rust inhibitor (e.g., a metal compound), a crosslinking agent, an antibacterial/antifungal agent, an antifoaming agent, and a surfactant, within a range that does not impair the effects of the present invention.

Further, the surface adjuster preferably contains no hectorite. Because of the absence of hectorite, the amount of a fluorosilicic acid (silicofluoric acid) compound of a zinc phosphate chemical conversion treatment agent is not increased, and hydrofluoric acid is thus not reduced, so that deceleration of etching reaction can be inhibited.

### <pH of Surface Adjuster>

The pH of the surface adjuster is not particularly limited; however, it is preferably 8.0 or higher, more preferably 9.0 or higher, but preferably 11.0 or lower, more preferably 10.5 or lower. By controlling the pH of the surface adjuster to be in this range, the effects of the present invention are likely to be exerted, which is preferred.

The pH of the surface adjuster can be measured using a commercially available pH meter. The pH meter may be of a stationary type or a hand-held type, and the pH can be measured after calibrating the pH meter with a pH calibration solution.

### <Method of Producing Surface Adjuster>

The surface adjuster can be obtained by adding the zinc-containing phosphate (A) and the alkali salt (B) of the copolymer (b2) to the aqueous medium (C). The resulting surface adjuster has excellent stability with time even when it contains the alkali salt (B) at a high concentration; therefore, after the surface adjuster containing the alkali salt (B) at a high concentration is obtained, the surface adjuster may be diluted with the aqueous medium at the time of use.

### <Method of Producing Metal Material Having Chemical Conversion Coating>

The method of producing a metal material having a chemical conversion coating according to another embodiment of the present invention includes: the surface adjustment step of bringing the above-described surface adjuster for zinc phosphate chemical conversion treatment into contact with a metal material; and the chemical conversion treatment step of bringing a zinc phosphate chemical conversion treatment agent into contact with the metal material after the surface adjustment step.

The subject of the surface treatment with the surface adjuster is a metal surface, and the material to be treated may be a metal material, or a material to be treated that has a metal material being exposed on a part or the entirety of a surface. In other words, a material to be treated that contains a metal surface is the subject of the surface treatment. Examples of the material to be treated that has a metal material being exposed on a part or the entirety of a surface include a composite material of a resin and a metal material, and a composite material of a glass and a metal material.

The type of the metal material is not particularly limited. Examples thereof include: iron and steel materials (e.g., cold-rolled steel sheets, hot-rolled steel sheets, mill scale materials, pickled steel sheets, high tensile steel sheets, tool steels, alloy tool steels, spheroidal graphite cast irons, and gray cast irons); plated materials, such as zinc-plated materials (e.g., electrogalvanized materials, hot-dip galvanized materials, aluminum-containing galvanized materials, electrogalvanized materials, zinc-nickel plated materials, zinc-cobalt plated materials, and zinc vapor-deposited materials), zinc alloy-plated materials (e.g., alloyed molten zinc-plated materials, Zn-Al alloy-plated materials, Zn-Al-Mg alloy-plated materials, and zinc alloy-electroplated materials), aluminum-plated materials, nickel-plated materials, tin-plated materials, chromium-plated materials, and chromium alloy-plated materials (e.g., Cr-Ni alloy-plated materials); aluminum materials and aluminum alloy materials (e.g., 1,000 series, 2,000 series, 3,000 series, 4,000 series, 5,000 series, 6,000 series, aluminum casts, aluminum alloy casts, and die-cast materials); copper materials and copper alloy materials; titanium materials and titanium alloy materials; and magnesium materials and magnesium alloy materials.

As a method of bringing each chemical agent into contact with the metal material, any known treatment method may be employed, and examples thereof include an immersion method (including electrolytic treatment), a spray method, a roll immersion method, a brush coating method, and a combination thereof. The contact temperature is not particularly limited; however, it is usually 10°C to 60°C, preferably 30°C to 45°C. As for the contact time, the contact can be made under known conditions, for example, for 5 seconds to 600 seconds, preferably 10 seconds to 300 seconds.

Further, prior to the surface adjustment step, the degreasing treatment step of performing so-called degreasing, which is removal of oil and deposits from the surface of the metal material, may be incorporated. A method of this degreasing treatment is not particularly limited, and any known method can be applied. The degreasing treatment step may or may not be followed by washing with water.

The chemical conversion treatment step is preferably performed immediately after the surface adjustment step, without washing with water and drying. As the zinc phosphate chemical conversion treatment agent, any known zinc phosphate chemical conversion treatment agent can be used.

After the above-described zinc phosphate chemical conversion treatment, washing with water and/or drying may be performed as required. Further, after the zinc phosphate chemical conversion treatment, the chemical conversion treatment step for the formation of another chemical conversion coating may be performed as well. Examples of this chemical conversion treatment step for the formation of another chemical conversion coating include various chemical conversion treatment steps, such as the zirconium chemical conversion treatment step, the titanium chemical conversion treatment step, the hafnium chemical conversion treatment step, and the vanadium chemical conversion treatment step. As chemical conversion treatment agents in these various chemical conversion treatment steps, known agents can be used, and known conditions can be applied as the chemical conversion treatment conditions. It is noted here that, after this another chemical conversion treatment step, washing with water and/or drying may be performed as required.

### <Method of Producing Metal Material Having Paint>

The method of producing a metal material having a paint according to yet another embodiment of the present invention includes the painting step of forming a paint on a surface of a metal material having a zinc phosphate chemical conversion coating. A painting method for forming the paint is not particularly limited, and any known method, such as roll painting, electrodeposition painting (e.g., cationic electrodeposition painting), spray painting, hot spray painting, airless spray painting, electrostatic painting (e.g., electrostatic powder painting), roller coating, curtain flow coating, brush painting, bar coating, or flow immersion, can be applied. After the painting step, for example, the drying step (including a baking process and a curing process) of drying a coating material on the surface of the painted metal material may be performed as well.

Examples of the paint include known paints, such as oil-based paints, cellulose-derived paints, phenol resin paints, alkyd resin paints, amino-alkyd resin paints, urea resin paints, unsaturated resin paints, vinyl resin paints, acrylic resin paints, epoxy resin paints, polyurethane resin paints, silicon resin paints, fluorine resin paints, anticorrosive paints, antifouling paints, powder paints, cationic electrodeposition paints, anionic electrodeposition paints, aqueous paints, and solvent paints. In the painting step, a single painting operation, or two or more painting operations may be performed using the same paint or various different paints. The drying step is a treatment for drying and curing the applied paint(s). Examples of a drying method include air drying, vacuum drying, convective heat drying (e.g., natural convective heat drying or forced convective heat drying), radiation drying (e.g., near-infrared drying or far-infrared drying), ultraviolet dry-curing, electron beam dry-curing, vapor curing, and bake drying. These drying methods may be performed singly, or in combination of two or more thereof.

For the above-described cationic electrodeposition painting, any known method can be applied. Examples thereof include a method of immersing the metal material having a chemical conversion coating in a paint that is a cationic electrodeposition paint containing an amine-added epoxy resin along with a blocked polyisocyanate curing agent serving as a curing component. The cationic electrodeposition painting is performed by, for example, applying a voltage to the metal material having a chemical conversion coating in the cathode direction using a rectifier, with the paint being maintained at a prescribed temperature and stirred. The metal material subjected to cationic electrodeposition painting in this manner is washed with water and then baked, whereby a paint can be formed on the chemical conversion coating. The baking is performed in a prescribed temperature range for a certain period. Specifically, the baking is performed at 170°C for 20 minutes. When a cationic electrodeposition painting method using a cationic electrodeposition paint is employed, it is preferred to control the sodium ion concentration to be lower than 500 ppm by mass in the treatment agents used in the degreasing step, the pretreatment step, various chemical conversion treatment steps, and the like.

As a painting method using a powder paint, such as spray painting, electrostatic paint, or flow immersion, any known method can be applied. Examples of the powder paint include those which contain a polyester resin and, as a curing agent, a block isocyanate curing agent, a *β*-hydroxyalkylamide curing agent (see, for example, Japanese Unexamined Patent Application Publication No. 2011-88083), or triglycidyl isocyanurate. The resultant is baked in a prescribed temperature range for a certain period. Specifically, this baking is performed in a range of 150 to 250°C for 20 minutes.

As a painting method using a solvent paint, such as spray painting, electrostatic painting, or bar coating, any known method can be applied. Examples of the solvent paint include those which contain a resin, such as a melamine resin, an acrylic resin, a urethane resin, or a polyester resin, and an organic solvent such as a thinner. The resultant is baked in a prescribed temperature range for a certain period. Specifically, this baking is performed at 130°C for 20 minutes.

The paint obtained by the painting step may be of a single layer or plural layers. When the paint has plural layers, for example, the paint, the painting methods using the paints, and the methods of drying the resulting painted metal material, which are used for the formation of the respective layers, may be the same or different.

### EXAMPLES

The present invention will now be described in more detail by way of Examples; however, the present invention is not limited only to the below-described Examples. It is noted here that, unless otherwise specified, "part(s)" and "%" in the below-described Examples mean "part(s) by mass" and "% by mass", respectively.

### <Preparation of Copolymers (b2)>

Referring to a known method (e.g., Japanese Unexamined Patent Application Publication No. 2019-31689), a polymer and copolymers 1 to 10, in which the ratio of the mass of a 2-acrylamide-2-methylpropane sulfonic acid unit (b1) with respect to the mass of a copolymer (b2) was as shown in Table 1, were each prepared. It is noted here that: the polymer was obtained by polymerizing acrylic acid; the copolymers 1, 2, 4, 5, 7 to 9, and 12 to 14 were each obtained by copolymerizing 2-acrylamide-2-methylpropane sulfonic acid and acrylic acid; the copolymer 3 was obtained by copolymerizing 2-acrylamide-2-methylpropane sulfonic acid and methyl acrylate; the copolymers 6 and 10 were each obtained by copolymerizing 2-acrylamide-2-methylpropane sulfonic acid and maleic acid; and the copolymer 11 was obtained by copolymerizing acryl sulfonic acid and acrylic acid.

### <Preparation of Alkali Salts (B) of Polymer and Copolymers>

Aqueous solutions of sodium compounds of the thus prepared polymer and copolymers 1 to 10 were obtained by adjusting the respective polymer and copolymers with sodium hydroxide to have a pH of 7.0. In this process, the content of a sodium salt of each of the polymer and copolymers in the respective aqueous solutions was adjusted to be 40.0% by mass.

As for the mass ratio of the unit (b1) in each copolymer, the area values of prescribed protons derived from the unit (b1) contained in (b2) and the acrylic acid unit were measured using a nuclear magnetic resonance analyzer (NMR) for the above-obtained aqueous solutions of sodium compounds of the polymer and the copolymers. Relative molar ratios were calculated from the thus measured area values, and the molecular weight of each of the units (b1) and (b2) as an acid were multiplied by the thus calculated respective molar ratios to calculate the mass, which was subsequently substituted into a formula {[(b1)/(b2)] × 100} to calculate the mass ratio of the unit (b 1).

### ¹H-NMR Measurement Conditions

Measurement device: JNM-ECX400 (manufactured by JOEL Ltd.)
Probe: 40TH5AT/FG2D-5mm (Broadband Gradient Tunable Probe)
Measurement nuclide: 1H
Measurement solvent: deuterium oxide
Number of integrations: 16

Further, the number-average molecular weight of each of the polymer and the copolymers was analyzed by GPC (gel permeation chromatography), and determined as an average molecular weight in terms of polyethylene glycol.

**Table 1**

| Polymer/ Copolymer | Type of sulfonic acid unit | Mass ratio of sulfonic acid unit (% by mass) | Type and mass ratio of acrylic acid unit (% by mass) | | | | Number-average molecular weight |
|---|---|---|---|---|---|---|---|
| Polymer | None | 0.00 | Acrylic acid polymer | 100.00 | | | about 5000 |
| Copolymer 1 | 2-acrylamide-2-methylpropane sulfonic acid | 5.00 | Acrylic acid | 95.00 | | | about 5000 |
| Copolymer 2 | 2-acrylamide-2-methylpropane sulfonic acid | 7.50 | Acrylic acid | 92.50 | | | about 5000 |
| Copolymer 3 | 2-acrylamide-2-methylpropane sulfonic acid | 9.02 | Acrylic acid | 88.48 | Methyl acrylate | 2.50 | about 5000 |
| Copolymer 4 | 2-acrylamide-2-methylpropane sulfonic acid | 9.02 | Acrylic acid | 90.98 | | | about 5000 |
| Copolymer 5 | 2-acrylamide-2-methylpropane sulfonic acid | 12.38 | Acrylic acid | 87.62 | | | about 5000 |
| Copolymer 6 | 2-acrylamide-2-methylpropane sulfonic acid | 15.00 | Acrylic acid | 80.00 | Maleic acid | 5.00 | about 10000 |
| Copolymer 7 | 2-acrylamide-2-methylpropane sulfonic acid | 22.00 | Acrylic acid | 78.00 | | | about 10000 |
| Copolymer 8 | 2-acrylamide-2-methylpropane sulfonic acid | 36.47 | Acrylic acid | 63.53 | | | about 10000 |
| Copolymer 9 | 2-acrylamide-2-methylpropane sulfonic acid | 38.76 | Acrylic acid | 61.24 | | | about 15000 |
| Copolymer 10 | 2-acrylamide-2-methylpropane sulfonic acid | 38.76 | Acrylic acid | 56.24 | Maleic acid | 5.00 | about 15000 |
| Copolymer 11 | Acrylic sulfonic acid | 39.02 | Acrylic acid | 60.98 | | | about 5000 |
| Copolymer 12 | 2-acrylamide-2-methylpropane sulfonic acid | 42.86 | Acrylic acid | 57.14 | | | about 10000 |
| Copolymer 13 | 2-acrylamide-2-methylpropane sulfonic acid | 48.82 | Acrylic acid | 51.18 | | | about 10000 |
| Copolymer 14 | 2-acrylamide-2-methylpropane sulfonic acid | 58.87 | Acrylic acid | 41.13 | | | about 10000 |

### <Production of Surface Adjusters (High Concentration) for Zinc Phosphate Chemical Conversion Treatment>

Zinc phosphate was prepared as a zinc-containing phosphate (A). This zinc phosphate was mixed with water and each of the sodium compounds of the polymer and the copolymers in accordance with the respective ratios shown in Table 2, whereby high-concentration surface adjusters 1 to 44 were produced. It is noted here that an antifoaming agent and an antifungal agent were added to the surface adjuster 35, and zinc-manganese phosphate was used in place of zinc phosphate in the surface adjuster 36.

**[Table 2-1]**

| | Example/ Comparative Example | Phosphate (A) | Amount (g/1000g) | Polymer/ Copolymer of compund(B) | Amount (g/1000g) | Amount of antifoaming agent (g/1000g) | Amount of antifungal agent (g/1000g) |
|---|---|---|---|---|---|---|---|
| Surface adjuster 1 | Example 1 | Zinc phosphate | 300 | Copolymer 2 | 15.32 | | |
| Surface adjuster 2 | Example 2 | Zinc phosphate | 300 | Copolymer 2 | 12.03 | | |
| Surface adjuster 3 | Example 3 | Zinc phosphate | 300 | Copolymer 2 | 11.68 | | |
| Surface adjuster 4 | Example 4 | Zinc phosphate | 300 | Copolymer 2 | 10.96 | | |
| Surface adjuster 5 | Example 5 | Zinc phosphate | 300 | Copolymer 3 | 15.32 | | |
| Surface adjuster 6 | Example 6 | Zinc phosphate | 300 | Copolymer 3 | 12.03 | | |
| Surface adjuster 7 | Example 7 | Zinc phosphate | 300 | Copolymer 3 | 11.68 | | |
| Surface adjuster 8 | Example 8 | Zinc phosphate | 300 | Copolymer 3 | 10.96 | | |
| Surface adjuster 9 | Example 9 | Zinc phosphate | 300 | Copolymer 4 | 15.32 | | |
| Surface adjuster 10 | Example 10 | Zinc phosphate | 300 | Copolymer 4 | 12.03 | | |
| Surface adjuster 11 | Example 11 | Zinc phosphate | 300 | Copolymer 4 | 11.68 | | |
| Surface adjuster 12 | Example 12 | Zinc phosphate | 300 | Copolymer 4 | 10.96 | | |
| Surface adjuster 13 | Example 13 | Zinc phosphate | 300 | Copolymer 5 | 15.32 | | |
| Surface adjuster 14 | Example 14 | Zinc phosphate | 300 | Copolymer 5 | 12.03 | | |
| Surface adjuster 15 | Example 15 | Zinc phosphate | 300 | Copolymer 5 | 11.68 | | |
| Surface adjuster 16 | Example 16 | Zinc phosphate | 300 | Copolymer 5 | 10.96 | | |
| Surface adjuster 17 | Example 17 | Zinc phosphate | 300 | Copolymer 6 | 15.32 | | |
| Surface adjuster 18 | Example 18 | Zinc phosphate | 300 | Copolymer 6 | 12.03 | | |
| Surface adjuster 19 | Example 19 | Zinc phosphate | 300 | Copolymer 6 | 11.68 | | |
| Surface adjuster 20 | Example 20 | Zinc phosphate | 300 | Copolymer 6 | 10.96 | | |
| Surface adjuster 21 | Example 21 | Zinc phosphate | 300 | Copolymer 7 | 15.32 | | |

**[Table 2-2]**

| | | | | | | | |
|---|---|---|---|---|---|---|---|
| Surface adjuster 22 | Example 22 | Zinc phosphate | 300 | Copolymer 7 | 12.03 | | |
| Surface adjuster 23 | Example 23 | Zinc phosphate | 300 | Copolymer 7 | 11.68 | | |
| Surface adjuster 24 | Example 24 | Zinc phosphate | 300 | Copolymer 7 | 10.96 | | |
| Surface adjuster 25 | Example 25 | Zinc phosphate | 300 | Copolymer 8 | 15.32 | | |
| Surface adjuster 26 | Example 26 | Zinc phosphate | 300 | Copolymer 8 | 12.03 | | |
| Surface adjuster 27 | Example 27 | Zinc phosphate | 300 | Copolymer 8 | 11.68 | | |
| Surface adjuster 28 | Example 28 | Zinc phosphate | 300 | Copolymer 8 | 10.96 | | |
| Surface adjuster 29 | Example 29 | Zinc phosphate | 300 | Copolymer 9 | 15.32 | | |
| Surface adjuster 30 | Example 30 | Zinc phosphate | 300 | Copolymer 9 | 12.03 | | |
| Surface adjuster 31 | Example 31 | Zinc phosphate | 300 | Copolymer 9 | 11.68 | | |
| Surface adjuster 32 | Example 32 | Zinc phosphate | 300 | Copolymer 9 | 1096 | | |
| Surface adjuster 33 | Example 33 | Zinc phosphate | 300 | Copolymer 10 | 15.32 | | |
| Surface adjuster 34 | Example 34 | Zinc phosphate | 300 | Copolymer 10 | 12.03 | | |
| Surface adjuster 35 | Example 35 | Zinc phosphate | 300 | Copolymer 10 | 12.03 | 02*¹ | 0.5*² |
| Surface adjuster 36 | Example 36 | Zinc-manganese phosphate | 300 | Copolymer 10 | 12.03 | | |
| Surface adjuster 37 | Example 37 | Zinc phosphate | 300 | Copolymer 10 | 11.68 | | |
| Surface adjuster 38 | Example 38 | Zinc phosphate | 300 | Copolymer 10 | 10.96 | | |
| Surface adjuster 39 | Comparative Example 1 | Zinc phosphate | 300 | Polymer | 12.03 | | |
| Surface adjuster 40 | Comparative Example 2 | Zinc phosphate | 300 | Copolymer 1 | 12.03 | | |
| Surface adjuster 41 | Comparative Example 3 | Zinc phosphate | 300 | Copolymer 11 | 12.03 | | |
| Surface adjuster 42 | Comparative Example 4 | Zinc phosphate | 300 | Copolymer 12 | 12.03 | | |
| Surface adjuster 43 | Comparative Example 5 | Zinc phosphate | 300 | Copolymer 13 | 12.03 | | |
| Surface adjuster 44 | Comparative Example 6 | Zinc phosphate | 300 | Copolymer 14 | 12.03 | | |

| | | | | | | | |
|---|---|---|---|---|---|---|---|
| *1 Polyoxyethylene alkyl ether *2 Sodium benzoate | | | | | | | |

### <Stability of High-Concentration Surface Adjusters>

The surface adjusters of Examples 1 to 38 and Comparative Examples 1 to 6 were hermetically sealed in a container. After the preparation, the surface adjusters were left to stand in a cool dark place (25°C), and their outer appearances were checked in the second month. The stability was evaluated as "o" when separation was not observed, or "×" when separation was observed.

**[Table 3-1]**

| | Example/ Comperative Example | Change in outer appearance after being left to stand for 2 months |
|---|---|---|
| Surface adjuster 1 | Example 1 | ○ |
| Surface adjuster 2 | Example 2 | ○ |
| Surface adjuster 3 | Example 3 | ○ |
| Surface adjuster 4 | Example 4 | ○ |
| Surface adjuster 5 | Example 5 | ○ |
| Surface adjuster 6 | Example 6 | ○ |
| Surface adjuster 7 | Example 7 | ○ |
| Surface adjuster 8 | Example 8 | ○ |
| Surface adjuster 9 | Example 9 | ○ |
| Surface adjuster 10 | Example 10 | ○ |
| Surface adjuster 11 | Example 11 | ○ |
| Surface adjuster 12 | Example 12 | ○ |
| Surface adjuster 13 | Example 13 | ○ |
| Surface adjuster 14 | Example 14 | ○ |
| Surface adjuster 15 | Example 15 | ○ |
| Surface adjuster 16 | Example 16 | ○ |
| Surface adjuster 17 | Example 17 | ○ |
| Surface adjuster 18 | Example 18 | ○ |
| Surface adjuster 19 | Example 19 | ○ |
| Surface adjuster 20 | Example 20 | ○ |
| Surface adjuster 21 | Example 21 | ○ |
| Surface adjuster 22 | Example 22 | ○ |
| Surface adjuster 23 | Example 23 | ○ |

**[Table 3-2]**

| | | |
|---|---|---|
| Surface adjuster 24 | Example 24 | ○ |
| Surface adjuster 25 | Example 25 | ○ |
| Surface adjuster 26 | Example 26 | ○ |
| Surface adjuster 27 | Example 27 | ○ |
| Surface adjuster 28 | Example 28 | ○ |
| Surface adjuster 29 | Example 29 | ○ |
| Surface adjuster 30 | Example 30 | ○ |
| Surface adjuster 31 | Example 31 | ○ |
| Surface adjuster 32 | Example 32 | ○ |
| Surface adjuster 33 | Example 33 | ○ |
| Surface adjuster 34 | Example 34 | ○ |
| Surface adjuster 35 | Example 35 | ○ |
| Surface adjuster 36 | Example 36 | ○ |
| Surface adjuster 37 | Example 37 | ○ |
| Surface adjuster 38 | Example 38 | ○ |
| Surface adjuster 39 | Comperative Example 1 | × |
| Surface adjuster 40 | Comperative Example 2 | × |
| Surface adjuster 41 | Comperative Example 3 | × |
| Surface adjuster 42 | Comperative Example 4 | × |
| Surface adjuster 43 | Comperative Example 5 | × |
| Surface adjuster 44 | Comperative Example 6 | × |

### <Preparation of Surface Adjuster for Zinc Phosphate Chemical Conversion Treatment>

The surface adjusters of Examples 1 to 38 and Comparative Examples 1 to 6 were left to stand for 3 months in a cool dark place after being prepared, and 0.5 g of each surface adjuster was collected and added to deionized water, after which a 0.25%-by-mass aqueous sodium hydroxide solution was added thereto dropwise to adjust the pH to be 9.0 and the amount of the resultant to be 1,000 g, whereby surface adjusters to be applied to a metal material were obtained.

### <Preparation of Metal Materials>

### (Metal Materials)

As metal materials, 1 mm-thick cold-rolled steel sheet, 590 MPa-grade high-tensile steel sheet (manufactured by Paltec Co., Ltd.), and mill scale material (iron-based material manufactured by Paltec Co., Ltd.) were each cut into a size of 150 mm (long side) × 75 mm (short side).

### (Degreasing Step)

The mill scale material was degreased and rubbed with a soft fabric in advance. Next, 100 L of a degreasing solution (FINE CLEANER E2082 manufactured by Nihon Parkerizing Co., Ltd., 20-g/L aqueous solution) was prepared, the temperature thereof was adjusted to be 43°C, and then carbon dioxide was blown into the degreasing solution to adjust the pH to be 10.5. The thus adjusted degreasing solution was sprayed to the mill scale material for 2 minutes by a spray method, and tap water was subsequently sprayed to the mill scale material for 30 seconds by a spray method, followed by 30-second spraying of deionized water by a spray method. Thereafter, air was blown to the mill scale material to remove water adhering to the surface of the mill scale material, and the absence of detachment of an oxide film was confirmed.

### (Surface Adjustment Step and Zinc Phosphate Chemical Conversion Treatment Step)

The cold-rolled steel sheet, the high-tensile steel sheet, and the degreased and water-washed mill scale material were immersed in each of the surface adjusters of Examples 1 to 38 and Comparative Examples 1 to 6 at 25°C for 30 seconds.

Then, 48 g/L of a zinc phosphate chemical conversion treatment agent (manufactured by Nihon Parkerizing Co., Ltd., PALBOND SX35 make-up agent), 17 g/L of ADDITIVE 4856 (manufactured by Nihon Parkerizing Co., Ltd.), 5 g/L of ADDITIVE 4813 (manufactured by Nihon Parkerizing Co., Ltd.), and ACCELERATOR 131 (manufactured by Nihon Parkerizing Co., Ltd.) were added, and 2.5% by mass of sodium hydroxide was further added to prepare 10 L of a zinc phosphate chemical conversion treatment agent, which was subsequently heated to 35°C. At this point, the free acidity was 0.6 pt, the total acidity was 23 pt, and the accelerator was 3.0 pt. The metal materials were each immersed in this zinc phosphate chemical conversion treatment agent for the respective durations shown in Table 4. In this process, the amount of a zinc phosphate chemical conversion coating to be adhered to each metal material was set at 2 g/m². It is noted here that, since the components of the chemical conversion treatment agent were reduced by performing the zinc phosphate chemical conversion treatment, the components were supplemented as appropriate.

### (Drying Step)

After performing the zinc phosphate chemical conversion treatment for the respective durations shown in Table 4, the surfaces of the metal materials were sprayed with tap water for 30 seconds and then with deionized water for 30 seconds, after which air was blown to remove water on the metal materials. Six pieces of metal materials were prepared for each of the cold-rolled steel sheet, the high-tensile steel sheet, and the mill scale material.

### <Evaluation of Metal Materials on Which Zinc Phosphate Chemical Conversion Coating Was Formed>

### (1) Outer Appearance

For each metal material on which a zinc phosphate chemical conversion coating was formed, the outer appearance of the zinc phosphate chemical conversion coating was checked by visual observation. The outer appearance was evaluated in terms of the presence or absence of metallic luster. The results thereof are shown in Table 4.

### (2) Formation Time of Zinc Phosphate Chemical Conversion Coating

The amount of a zinc phosphate chemical conversion coating to be adhered to each metal material was set at 2 g/m², and the amount of the adhered zinc phosphate chemical conversion coating was measured as follows.

The weight was measured for three pieces of each metal material on which a zinc phosphate chemical conversion coating was formed to calculate the amount of adhered zinc phosphate. The weight (W1 [g]) of each metal material after the chemical conversion treatment was measured, and the metal material after the chemical conversion treatment was subsequently immersed in a 75°C aqueous chromic acid solution, followed by measurement of the weight (W2 [g]) of the metal material from which the zinc phosphate chemical conversion coating was peeled off. The decrease in weight was divided by the surface area of the metal material, and the thus obtained value was defined as the amount (g/m²) of the zinc phosphate chemical conversion coating.

With regard to whether or not this weight reached a target adhesion amount of 2 g/m², a chemical conversion coating was formed on the metal material by performing the zinc phosphate chemical conversion treatment for 30 seconds, 45 seconds, 60 seconds, 75 seconds, 90 seconds, and 120 seconds, and the amount of adhered chemical conversion coating was measured at each treatment time, whereby the chemical conversion treatment time at which the target adhesion amount was achieved was verified.

**[Table 4-1]**

| Example/ Comperative Example | Surface adjuster before dilution | Cold-rolled steel sheet | | 590 MPa-grade high-tensile steel sheet | | Mill scale material | |
|---|---|---|---|---|---|---|---|
| | | Target-achieved chemical conversion treatment time (s) | Sheet outer appearance | Target-achieved chemical conversion treatment time (s) | Sheet outer appearance | Target-achieved chemical conversion treatment time (s) | Sheet outer appearance |
| Example 1 | Surface adjuster 1 | 75 | no metallic luster | 75 | no metallic luster | 75 | no metallic luster |
| Example 2 | Surface adjuster 2 | 75 | no metallic luster | 75 | no metallic luster | 75 | no metallic luster |
| Example 3 | Surface adjuster 3 | 75 | no metallic luster | 75 | no metallic luster | 75 | no metallic luster |
| Example 4 | Surface adjuster 4 | 75 | no metallic luster | 75 | no metallic luster | 75 | no metallic luster |
| Example 5 | Surface adjuster 5 | 75 | no metallic luster | 75 | no metallic luster | 75 | no metallic luster |
| Example 6 | Surface adjuster 6 | 75 | no metallic luster | 75 | no metallic luster | 75 | no metallic luster |
| Example 7 | Surface adjuster 7 | 75 | no metallic luster | 75 | no metallic luster | 75 | no metallic luster |
| Example 8 | Surface adjuster 8 | 75 | no metallic luster | 75 | no metallic luster | 75 | no metallic luster |
| Example 9 | Surface adjuster 9 | 75 | no metallic luster | 75 | no metallic luster | 75 | no metallic luster |
| Example 10 | Surface adjuster 10 | 75 | no metallic luster | 75 | no metallic luster | 75 | no metallic luster |
| Example 11 | Surface adjuster 11 | 75 | no metallic luster | 75 | no metallic luster | 75 | no metallic luster |
| Example 12 | Surface adjuster 12 | 75 | no metallic luster | 75 | no metallic luster | 75 | no metallic luster |
| Example 13 | Surface adjuster 13 | 75 | no metallic luster | 75 | no metallic luster | 75 | no metallic luster |
| Example 14 | Surface adjuster 14 | 75 | no metallic luster | 75 | no metallic luster | 75 | no metallic luster |
| Example 15 | Surface adjuster 15 | 75 | no metallic luster | 75 | no metallic luster | 75 | no metallic luster |

**[Table 4-2]**

| | | | | | | | |
|---|---|---|---|---|---|---|---|
| Example 16 | Surface adjuster 16 | 75 | no metallic luster | 75 | no metallic luster | 75 | no metallic luster |
| Example 17 | Surface adjuster 17 | 75 | no metallic luster | 75 | no metallic luster | 75 | no metallic luster |
| Example 18 | Surface adjuster 18 | 75 | no metallic luster | 75 | no metallic luster | 75 | no metallic luster |
| Example 19 | Surface adjuster 19 | 75 | no metallic luster | 75 | no metallic luster | 75 | no metallic luster |
| Example 20 | Surface adjuster 20 | 75 | no metallic luster | 75 | no metallic luster | 75 | no metallic luster |
| Example 21 | Surface adjuster 21 | 75 | no metallic luster | 75 | no metallic luster | 75 | no metallic luster |
| Example 22 | Surface adjuster 22 | 75 | no metallic luster | 75 | no metallic luster | 75 | no metallic luster |
| Example 23 | Surface adjuster 23 | 75 | no metallic luster | 75 | no metallic luster | 75 | no metallic luster |
| Example 24 | Surface adjuster 24 | 75 | no metallic luster | 75 | no metallic luster | 75 | no metallic luster |
| Example 25 | Surface adjuster 25 | 75 | no metallic luster | 75 | no metallic luster | 75 | no metallic luster |
| Example 26 | Surface adjuster 26 | 75 | no metallic luster | 75 | no metallic luster | 75 | no metallic luster |
| Example 27 | Surface adjuster 27 | 75 | no metallic luster | 75 | no metallic luster | 75 | no metallic luster |
| Example 28 | Surface adjuster 28 | 75 | no metallic luster | 75 | no metallic luster | 75 | no metallic luster |
| Example 29 | Surface adjuster 29 | 75 | no metallic luster | 75 | no metallic luster | 75 | no metallic luster |
| Example 30 | Surface adjuster 30 | 75 | no metallic luster | 75 | no metallic luster | 75 | no metallic luster |

**[Table 4-3]**

| | | | | | | | |
|---|---|---|---|---|---|---|---|
| Example 31 | Surface adjuster 31 | 75 | no metallic luster | 75 | no metallic luster | 75 | no metallic luster |
| Example 32 | Surface adjuster 32 | 75 | no metallic luster | 75 | no metallic luster | 75 | no metallic luster |
| Example 33 | Surface adjuster 33 | 75 | no metallic luster | 75 | no metallic luster | 75 | no metallic luster |
| Example 34 | Surface adjuster 34 | 75 | no metallic luster | 75 | no metallic luster | 75 | no metallic luster |
| Example 35 | Surface adjuster 35 | 75 | no metallic luster | 75 | no metallic luster | 75 | no metallic luster |
| Example 36 | Surface adjuster 36 | 75 | no metallic luster | 75 | no metallic luster | 75 | no metallic luster |
| Example 37 | Surface adjuster 37 | 75 | no metallic luster | 75 | no metallic luster | 75 | no metallic luster |
| Example 38 | Surface adjuster 38 | 75 | no metallic luster | 75 | no metallic luster | 75 | no metallic luster |
| Comperative Example 1 | Surface adjuster 39 | 120 | no metallic luster | 120 | with metallic luster | 120 | with metallic luster |
| Comperative Example 2 | Surface adjuster 40 | 90 | no metallic luster | 120 | no metallic luster | 120 | no metallic luster |
| Comperative Example 3 | Surface adjuster 41 | 90 | no metallic luster | 90 | with metallic luster | 90 | with metallic luster |
| Comperative Example 4 | Surface adjuster 42 | 90 | no metallic luster | 90 | no metallic luster | 90 | no metallic luster |
| Comperative Example 5 | Surface adjuster 43 | 90 | no metallic luster | 90 | no metallic luster | 90 | with metallic luster |
| Comperative Example 6 | Surface adjuster 44 | 90 | no metallic luster | 90 | no metallic luster | 90 | with metallic luster |

### INDUSTRIAL APPLICABILITY

The surface adjuster can be suitably used on various metal materials that are used in automobile bodies, home electric appliances, and the like.

Further, according to the present invention, a dense zinc phosphate chemical conversion coating of a level comparable to those of prior art can be obtained in a short time even on a material that is difficult to chemically convert. In other words, the energy efficiency required for the preparation of a treated material can be improved. In addition, this can contribute to space saving in the repair, reconstruction, new line assembly of a zinc phosphate chemical conversion treatment equipment, enabling effective utilization of space.

The present invention has been described above in detail referring to concrete Examples thereof; however, it is obvious to those skilled in the art that various modifications and changes can be made without departing from the gist and the scope of the present invention.

## Claims

1. A surface adjuster for zinc phosphate chemical conversion treatment, comprising:
a zinc-containing phosphate (A);
an alkali salt (B) of a copolymer (b2) containing a 2-acrylamide-2-methylpropane sulfonic acid unit (b 1), in which a ratio of (b1) in the copolymer (b2) is 7.5% by mass to 40.0% by mass; and
an aqueous medium (C).

2. The surface adjuster for zinc phosphate chemical conversion treatment according to claim 1, comprising substantially no hectorite.

3. A method of producing a metal material having a chemical conversion coating, the method comprising:
the surface adjustment step of bringing the surface adjuster for zinc phosphate chemical conversion treatment according to claim 1 or 2 into contact with a metal material; and
the chemical conversion treatment step of bringing a zinc phosphate chemical conversion treatment agent into contact with the metal material after the surface adjustment step.

4. A method of producing a metal material having a paint, the method comprising the painting step of forming a paint on or over a surface of a metal material having a chemical conversion coating that is obtained by the method according to claim 3.
